# EUROPÄISCHE PATENTSCHRIFT

(11) **EP 3 645 756 B1**
(45) Veröffentlichungstag und Bekanntmachung des Hinweises auf die Patenterteilung: **21.04.2021**
(21) Anmeldenummer: 18735215.8
(22) Anmeldetag: 20.06.2018
(51) Int. Cl.: C23C 8/32, C21D 1/06, C21D 1/25, C21D 1/74, C21D 6/04, C21D 8/02, C21D 9/00, C22C 38/04, C22C 38/44, C23C 8/26

(54) **MARTENSITISCH HÄRTBARER STAHL UND DESSEN ANWENDUNG, INSBESONDERE ZUR HERSTELLUNG EINER SCHRAUBE**
MARTENSITIC HARDENING STEEL AND ITS USE, IN PARTICULAR FOR PRODUCING A SCREW
ACIER DURCISSABLE PAR FORMATION DE MARTENSITE ET SON UTILISATION, EN PARTICULIER DESTINÉ À FABRIQUER UNE VIS

(30) Priorität: 26.06.2017 EP 17177789
(43) Veröffentlichungstag der Anmeldung: 06.05.2020
(73) Patentinhaber: Hilti Aktiengesellschaft, 9494 Schaan (LI)
(72) Erfinder: SCHNEIDER, Roland, 6824 Schlins (AT); BISCHOF, Michael, 6900 Bregenz (AT); TOMANDL, Alexander, 6800 Feldkirch (AT)
(74) Vertreter: Hilti Aktiengesellschaft Corporate Intellectual Property
(86) Internationale Anmeldenummer: PCT/EP2018/066405
(87) Internationale Veröffentlichungsnummer: WO 2019/002044

(56) Entgegenhaltungen:
- DE-T2- 69 010 107
- JP-A- S5 453 615

## Beschreibung

Die Erfindung betrifft ein Verfahren zum Herstellen eines Formkörpers, insbesondere eines gehärteten Formkörpers, aus einem Rohling, einen Stahl, dessen Verwendung zur Herstellung einer Schraube und eine Schraube.

Für Betonschrauben und Selbstbohrschrauben für Stahl-Metall-Anwendungen sind regelmässig Werkstoffkonzepte mit hoher Oberflächenhärte zumindest in Teilbereichen der Schraube, hoher Kernzähigkeit, hohem Widerstand gegenüber allgemeiner Korrosion, Lochkorrosion sowie chlorid- oder wasserstoffinduzierter Versprödung und guter plastischer Umformbarkeit erwünscht. Gemäss EP 2204244 A1 und den Betonschrauben, die unter dem Namen "Hilti HUS-HR" angeboten werden, wird dies durch Hartmetall-Schneidelemente erzielt, die im Spitzenbereich der Schraube auf das Schraubengewinde aufgeschweisst sind, wobei die Schraube ansonsten aus nichtrostendem austenitischen A4-Stahl, vergleichbar 1.4401, bestehen kann. Solche Schrauben können allerdings relativ aufwändig zu fertigen sein.

Im Bereich der rostfreien Selbstbohrschrauben für Stahl-Metall-Anwendungen sind sogenannte Bimetallschrauben bekannt, die sich dadurch auszeichnen, dass auf den Schraubengrundkörper, also auf den Kopf und den Schaft, aus austenitisch rostfreiem A2- oder A4-Stahl (vergleichbar 1.4301 bzw. 1.4401) ein Bolzen aus härtbarem Kohlenstoffstahl geschweisst ist. Dieser Bolzen wird nach dem Schweissen und Umformen mittels einer lokalen Wärmebehandlung gehärtet. Auch solche Schrauben können relativ aufwändig zu fertigen sein.

Die DE4033706 A1 beschreibt ein Wärmebehandlungsverfahren zur Erhöhung des Korrosionswiderstandes einer gehärteten Randschicht endformnaher Bauteile aus nichtrostenden martensitischen Stählen mit weniger als 0,4 gew.-% Kohlenstoff durch Eindiffusion von 0,2 bis 0,8 gew.-% Stickstoff in die Randschicht. Eine Anwendung in Schrauben wird von der DE4033706 A1 jedoch nicht gelehrt und insbesondere geht die DE4033706 A1 nicht auf eine Abstimmung der chemischen Zusammensetzung des Stahls und der Wärmebehandlungsparameter für eine Anwendung in Schrauben ein.

Die DE19626833A1 beschreibt ein Verfahren zur Erzeugung einer hochkorrosionsbeständigen martensitischen Randschicht über einem ferritischmartensitischen Kern in Bauteilen aus nichtrostendem Stahl. Die chemische Zusammensetzung des Stahls ist derart eingegrenzt, dass ein ferritisch-martensitisches Gefüge vorliegt und nach dem Einsatzhärten bei einer Temperatur von 1050°C - 1150°C mit Stickstoff der Ferritanteil im Kern zwischen 40 und 90 Vol.-% liegt und die Kernhärte weniger als 300 HV30 beträgt. Eine Anwendung des Verfahrens für Schrauben wird abermals nicht gelehrt.

Die DE102013108018 A1 beschreibt eine Schraube aus einem nichtrostendenden Stahl, beispielsweise 1.4113, wobei der Stahl im Wesentlichen frei von Nickel ist, wobei eine Randschicht aufgrund einer Aufstickungswärmebehandlung bei 1000-1200°C einen gegenüber dem restlichen Gefüge erhöhten Gehalt an gelöstem Stickstoff aufweist, und wobei die Schraube in der Randschicht ein martensitisches Gefüge und ansonsten ein ferritisches Gefüge aufweist.

Die WO14040995 A1 beschreibt ein Verfahren zum Herstellen einer selbstschneidenden Betonschraube, bei dem ein Rohling aus einem martensitisch härtbaren Stahl, insbesondere mit einem Kohlenstoffgehalt kleiner 0.07%, bei einer Temperatur grösser 900°C in einer stickstoffhaltigen Gasatmosphäre gehärtet wird.

Die TW201418549 A beschreibt eine Schraube mit einem Stahl aufweisend 0.26 bis 0.40% Kohlenstoff, 12 bis 14% Chrom, 0 bis 0.6% Nickel und 0 bis 1% Mangan.

Die unter dem Link:
https://online.unileoben.ac.at/mu_online/wbAbs.showThesis?pThesisNr=61746&pOrgNr=1 abrufbare Zusammenfassung weist darauf hin, dass martensitische Stähle, mit dem Hochtemperaturgasaufstick-Verfahren randaufgestickt und mit 14 % Chrom, besonders geeignet für die Verwendung als Werkstoff für ein Befestigungselement sein können.

Aufgabe der Erfindung ist es, ein Verfahren zum Herstellen eines Formkörpers, insbesondere einer Schraubenform, aus einem Stahlrohling sowie einen entsprechenden Stahl anzugeben, mit denen bei besonders geringem Herstellungsaufwand und hoher Produktzuverlässigkeit eine, insbesondere für Schraubenanwendungen, besonders vorteilhafte Kombination aus Randschichthärte, Kernzähigkeit und Korrosionsbeständigkeit, Widerstand gegen wasserstoff- und chloridinduzierter Versprödung und Bearbeitbarkeit, insbesondere Umformbarkeit, realisiert werden kann. Weiter ist es Aufgabe der Erfindung, eine Verwendung eines solchen Stahls sowie eine Schraube, welche einen solchen Stahl aufweist, anzugeben, mit denen die vorgenannten Vorteile umgesetzt werden können.

Die Aufgabe wird erfindungsgemäss durch ein Verfahren mit den Merkmalen des Anspruchs 1, einen Stahl mit den Merkmalen des Anspruchs 8, dessen Verwendung zur Herstellung einer Schraube gemäss Anspruch 9 und einer Schraube gemäss Anspruch 10 gelöst. Bevorzugte Ausführungsformen sind in den abhängigen Ansprüchen angegeben.

Ein erfindungsgemässes Verfahren dient zum Herstellen eines Formkörpers, vorzugsweise einer Schraubenform, und verwendet einen Rohling aufweisend einen Stahl mit einem Gewichtsanteil von 0,07 bis 0,14% gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan. Zusätzlich kann der Stahl weitere stahlübliche Beimengungen aufweisen, beispielsweise Vanadium (insbesondere < 0,2 gew.-%), Niob (insbesondere < 0,2% gew.-%), Titan (insbesondere < 0,2 gew.-%) und/oder Silizium (insbesondere < 0.5 gew.-%). Der Rest ist Eisen mit unvermeidlichen Verunreinigungen, beispielsweise Schwefel und/oder Phosphor, insbesondere jeweils < 0,02 gew.-%. Unter den Angaben "gew.-%" können in fachüblicher Weise Gewichtsprozentangaben verstanden werden. Insbesondere kann der Stahl als ein martensitisch härtbarer, rostfreier Stahl bezeichnet werden. Vorzugsweise weist der Stahl einen Gewichtsanteil von 0,08 bis 0,12 gew.-% Kohlenstoff auf.

Die Erfindung basiert auf der Erkenntnis, dass nichtrostende martensitische Stähle aussichtsreiche Kandidaten sein können, um die teilweise gegensätzlichen Anforderungen an den Stahl, die bei der Verwendung in Schrauben, insbesondere in selbstschneidenden Schrauben, auftreten können, zu erfüllen. Um die vielfältigen Anforderungen hinsichtlich hoher Oberflächenhärte und ausreichender Einhärtetiefe, gutem Korrosionswiderstand, guter Zähigkeit und hohem Widerstand gegenüber chlorid- oder wasserstoffinduzierter Versprödung zu erfüllen, muss die chemische Zusammensetzung des Stahls (insbesondere im Hinblick auf die Legierungsbestandteile Kohlenstoff, Chrom, Molybdän, Nickel und Mangan) sowie die für die Einstellung des Eigenschaftsprofils erforderliche mehrstufige Wärmebehandlung bestehend aus Hochtemperaturgasaufsticken, Gasphasenabschrecken, Tieftemperaturkühlen, Anlassen sowie optional lokalem Induktionshärten sorgfältig aufeinander abgestimmt werden. Bisherige Konzepte entsprechend dem Stand der Technik basieren häufig auf einer für eine Schraube eher ungünstigen Kombination von chemischer Zusammensetzung des nichtrostenden martensitischen Stahls und der Wärmebehandlung, so dass häufig nicht alle für eine Schraube geforderten Eigenschaften gleichzeitig in ausreichendem Masse erfüllt werden konnten.

Die erreichbare Härte von martensitisch-rostfreien Stählen hängt, so wie bei den klassischen Vergütungsstählen, regelmässig primär vom Kohlenstoffgehalt ab. Mit zunehmendem Kohlenstoffgehalt steigt die Härte an, wobei hierbei aber auch mit einer höheren Empfindlichkeit gegenüber Wasserstoffversprödung und mit geringerer Zähigkeit gerechnet werden muss. Aus diesem Grund sind Stähle vergleichbar 1.4108 für die Anwendung in Schrauben unter korrosiven Bedingungen in der Regel ungeeignet. Derartige stickstofflegierte Stähle verfügen mit einem Kohlenstoffgehalt von 0,25-0,35 gew.-% zwar über eine ausreichend hohe Oberflächenhärte und einen guten Widerstand gegenüber Lochkorrosion, sie sind aber regelmässig sehr spröde und vergleichsweise empfindlich hinsichtlich Wasserstoffversprödung.

Bei weich-martensitischen Stählen wird der Kohlenstoffgehalt abgesenkt (<0,1 gew.-% C) und durch austenitstabilisierendes Nickel ersetzt. Dadurch wird in der Regel eine hohe Zähigkeit, jedoch zugleich eine etwas geringere Härte verglichen mit Martensiten mit höherem Kohlenstoffgehalt erreicht. Die Stahlgüte 1.4313 (X3CrNiMo13-4) ist ein Repräsentant der weich-martensitischen Stahlgruppe. Diese Art der nichtrostenden martensitischen Stähle ist für die Anwendung in Schrauben häufig ebenfalls allenfalls eingeschränkt geeignet, weil die Stähle häufig nur eine relativ geringe Oberflächenhärte und einen für Schraubenanwendung häufig immer noch zu geringen Korrosionswiderstand aufweisen.

Nichtrostende martensitische Stähle bieten die Möglichkeit, durch Einsatzhärten mit Stickstoff anstelle von Kohlenstoff die für rostfreie Schrauben geforderte Kombination von hoher Randhärte bei gleichzeitig geringerer Kernhärte (gleichbedeutend mit guter Zähigkeit und hohem Widerstand gegenüber chlorid- oder wasserstoffinduzierter Versprödung) und gutem Korrosionswiderstand gezielt einzustellen. Stickstoff, welcher bei einem derartigen Einsatzhärten im Bauteil gelöst wird, erhöht die Oberflächenhärte, die Korrosionsbeständigkeit und die Druckeigenspannung der Randschicht. Aufgrund des in der Randschicht des Bauteils gelösten Stickstoffs wird diese Wärmebehandlungsmethode auch als "solution nitriding" bezeichnet.

Die Erfindung beinhaltet einen Stahl, dessen chemische Zusammensetzung aus einer Kombination der Legierungsbestandteile Kohlenstoff (0,07 - 0,14 gew.-%, vorzugsweise 0,08 - 0,12 gew.-%), Chrom (13 - 15 gew.-%), Molybdän (1,3 - 1,7 gew.-%), Nickel (1,5 - 2,0 gew.-%) und Mangan (1,0 bis 1,5 gew.-%, vorzugsweise 1,2 gew.-%), Vanadium (0 - 0,2 gew.-%), Niob (0-0,2 gew.-%), Titan (0-0,2 gew.-%), Silizium (0-0,5 gew.-%) und dem Rest Eisen besteht.

Im Rahmen der Erfindung wurde erkannt, dass mit einem solchen Stahl, insbesondere im Zusammenhang mit einer auf den Stahl abgestimmten, vorzugsweise mehrstufigen Wärmebehandlung, ein für Schrauben, grundsätzlich aber auch für andere Bauteile, besonders vorteilhaftes Eigenschaftsprofil erhalten werden kann. Wie weiter unten im Detail erläutert ist kann dies insbesondere auf einer Austenitisierung mit einer Gefügestabilisierung durch Delta-Ferrit-Gehalt während der Wärmebehandlung beruhen. Insbesondere konnte ein Eigenschaftsprofil realisiert werden, das sich durch eine gute Umformbarkeit des Rohlings, eine hohe Oberflächenhärte von 580 HV0.3 oder höher, eine maximale Kernhärte von 450 HV0.3 oder geringer, einen hohen Widerstand gegenüber allgemeiner Korrosion und Lochkorrosion im Kern (repräsentiert durch einen PRE-Index von 17 oder höher) und in der Randzone (repräsentiert durch einen PRE-Index von 23 oder höher), eine hohe Zähigkeit im Kern (insbesondere als Folge einer Kombination eines geringen Kohlenstoffgehalts und stabilem Delta-Ferrit, wodurch das Grobkornwachstum bei der Wärmebehandlung unterdrückt wird) und einen hohen Widerstand gegenüber chlorid- oder wasserstoffinduzierter Versprödung auszeichnet. Im Detail kann der Stahl insbesondere in folgender Hinsicht vorteilhaft sein:
1) Aufgrund des Kohlenstoff-Gehalts des Stahls ist die Kernhärte maximal 450 HV0.3 oder geringer.
2) Aufgrund der Gehalte an Kohlenstoff, Chrom, Molybdän, Nickel und Mangan ergibt sich folgendes:
   a) Es kann ein relativ hoher PRE-Index (Pitting Resistance Equivalent), vorzugsweise von 17 oder höher, erreicht werden, ohne jedoch den Zustandsbereich eines martensitischen oder martensitisch-ferritischen Gefüges zu verlassen.
   b) Der Stahl weist eine gute Verarbeitbarkeit zu Halbzeugformen wie Walzdraht oder gezogenem Blankdraht auf. Sowohl Walz- als auch Blankdraht weisen eine gute Kaltumformbarkeit, vorzugsweise repräsentiert durch eine Streckgrenze Rₚ 0.2 < 650 N/mm² auf, was insbesondere für die Herstellung von Schrauben in einem Kaltumformverfahren, vorzugsweise mit einem Walzverfahren, vorteilhaft sein kann.
   c) Bei einem Einsatzhärten im Temperaturbereich zwischen 1000°C und 1150°C, bevorzugt zwischen 1030°C und 1100°C, kann sich im Kernbereich des Rohlings ein überwiegend austenitisches Gefüge (vorzugsweise zwischen 70% - 95%) mit einem geringen Anteil von Delta-Ferrit im Ausmass von 5% - 30% einstellen, wobei dieser Delta-Ferrit-Gehalt von 5% - 30% eine stabilisierende Wirkung auf das Gefüge bei den besagten Temperaturen haben kann und dadurch einer Kornvergröberung entgegenwirken kann, was sich vorteilhaft auf die Zähigkeitseigenschaften auswirken kann. Der Delta-Ferrit-Gehalt kann bewusst auf maximal 30% beschränkt sein, da bei höheren Delta-Ferrit-Gehalten die Zähigkeit wieder abnehmen könnte. Der austenitische Gefügeanteil von 70% - 95% weist eine hohe Kohlenstofflöslichkeit auf, so dass der Bildung von Chrom-Karbiden und der damit verbundenen relativ hohen Anfälligkeit gegenüber interkristalliner Korrosion effizient entgegengewirkt wird. Vorzugsweise kann ein Delta-Ferrit-Gehalt zwischen 10% und 15% vorgesehen werden, entsprechend einem Austenitgehalt zwischen 90% und 85%.
   d) Beim Einsatzhärten im vorgenannten Temperaturbereich mit Eindiffusion von Stickstoff kann sich in der Randzone des Rohlings ein hauptsächlich austenitisches Gefüge einstellen, welches eine hohe Löslichkeit von Kohlenstoff und Stickstoff aufweist, so dass der Bildung von Chrom-Karbiden oder Chrom-Nitriden und der damit verbundenen relativ hohen Anfälligkeit gegenüber interkristalliner Korrosion effizient entgegengewirkt wird.
   e) Im Anschluss an die Wärmebehandlung kann im Kernbereich des Rohlings ein hauptsächlich martensitisches Gefüge mit einem geringen Anteil von Delta-Ferrit im Ausmass von 5% - 30% (bevorzugt 10% - 15%) vorliegen. Der Delta-Ferrit-Gehalt kann bewusst auf maximal 30% beschränkt sein, da bei höheren Delta-Ferrit-Gehalten die Zähigkeit wieder abnehmen könnte.
   f) Im Anschluss an die Wärmebehandlung kann in der Randzone des Rohlings ein hauptsächlich martensitisches Gefüge vorliegen, so dass eine hohe Aufhärtung erzielt werden kann.

Vorteilhafterweise ist bei dem erfindungsgemässen Verfahren demgemäss der Schritt des Einsatzhärtens des Rohlings mit Stickstoff aus der Gasphase, vorzugsweise bei Temperaturen zwischen 1000°C und 1150°C, besonders bevorzugt zwischen 1030°C und 1100°C, und/oder einem Stickstoffpartialdruck zwischen 0.05 bar und 0.3 bar, besonders bevorzugt zwischen 0.10 bar und 0.20 bar, vorgesehen, vorzugsweise im Anschluss an den Schritt des Bearbeitens des Rohlings. Durch ein solches Einsatzhärten mit Stickstoff (alleine oder, wie nachfolgend erläutert, optional in Kombination mit Kohlenstoff) kann die Randzone des Rohlings in einer insbesondere für Schraubenanwendung besonders vorteilhaften Weise gezielt modifiziert werden. Insbesondere kann beim Einsatzhärten zwischen 1000 und 1150°C Stickstoff in der Randzone des dann austenitischen Grundgefüges gelöst werden. Im Zusammenhang mit dem erfindungsgemässen Stahl konnte durch ein solches Einsatzhärten eine Oberflächenhärte von 580 HV0.3 oder höher bei einer Grenzhärte von 550 HV0.3 in einem Abstand von der Oberfläche von 0,15 - 0,30 mm (was besonders vorteilhaft für Betonschrauben sein kann) oder 0,1 - 0,15 mm (was besonders vorteilhaft für Selbstbohrschrauben sein kann) erreicht werden. Dies wiederum kann einen guten Widerstand gegen Gewindeverschleiss, auch beim Furchen in Beton sowie Bewehrungseisen, gewährleisten, was wiederum eine hohe Tragfähigkeit der Schraube ermöglicht. Darüber hinaus kann der gelöste Stickstoff den PRE-Index in der Randzone lokal auf 23 oder höher erhöhen und dadurch den Widerstand gegenüber Lochkorrosion deutlich verbessern, vorzugsweise auf ein mit einem 1.4401-Stahl vergleichbares Niveau. Insbesondere kann auch die elektrochemische Messgrösse des "Durchbruchspotenzials" auf ein mit einem 1.4401-Stahl vergleichbares Niveau gebracht werden. Die obere Grenze des Stickstoffpartialdrucks von 0.3 bar beziehungsweise 0.20 bar hat den Hintergrund, dass hiermit der Bildung von chromhaltigen und/oder stickstoffhaltigen Ausscheidungen effizient entgegengewirkt werden kann, was im Hinblick auf den Korrosionswiderstand vorteilhaft ist. Die untere Grenze des Stickstoffpartialdrucks von 0.05 bar beziehungsweise 0.10 bar hat den Hintergrund, dass erst ab diesem Druck eine massgebliche Wirkung des Stickstoffs eintritt. Die im Schritt des Einsatzhärtens vorgesehene Atmosphäre kann reiner Stickstoff oder ein Gasgemisch sein, welches bei den gegebenen Temperaturen eine gleichwertige Stickstoffaktivität aufweist. Insbesondere kann eine reine Stickstoffatmosphäre vorgesehen werden, sofern der Prozess in einem Niederdruckofen durchgeführt wird. In einem Atmosphärendruckofen könnte eine Verdünnung beispielsweise mit Edelgasen erfolgen.

Zweckmässigerweise kann vorgesehen werden, dass das Einsatzhärten des Rohlings mit Stickstoff aus der Gasphase in Kombination mit einem Aufkohlen des Rohlings mit Kohlenstoff aus der Gasphase erfolgt. Es kann also neben einer Erhöhung des Stickstoffgehalts zusätzlich eine Erhöhung des Kohlenstoffgehalts infolge Eindiffundierens von Kohlenstoff aus der Gasphase vorgesehen werden. Diese Ausführung basiert auf der Erkenntnis, dass bei gleichzeitiger Verfügbarkeit von Kohlenstoff und Stickstoff die Löslichkeit beider Elemente simultan erhöht werden kann, wobei mit einem höheren Stickstoffgehalt bei gleichzeitiger Vermeidung von Karbiden und Nitriden eine weitere vorteilhafte Erhöhung von Härte und Korrosionswiderstand erzielt werden kann. Um das Einsatzhärten des Rohlings mit Stickstoff aus der Gasphase in Kombination mit dem Aufkohlen des Rohlings mit Kohlenstoff aus der Gasphase durzuführen, können beispielsweise gasförmige stickstoffhaltige und kohlenstoffhaltige Medien getrennt voneinander und abwechselnd in die Prozesskammer eingeleitet werden. Alternativ kann ein Gasgemisch, welches sowohl Kohlenstoff als auch Stickstoff zur Verfügung stellt, verwendet werden (beispielsweise Ethin, C₂H₂, zusammen mit N₂).

Insbesondere kann das Verfahren den Schritt "Bearbeiten des Rohlings" aufweisen. In diesem Schritt kann der Rohling in die Form des Formkörpers gebracht werden. Das Bearbeiten kann beispielsweise das Ausbilden eines Gewindes am Rohling beinhalten. Insbesondere kann das Bearbeiten des Rohlings ein spanloses Umformen, insbesondere ein Kaltumformen, vorzugsweise ein Walzen, des Rohlings beinhalten. Besonders bevorzugt ist es, dass der Schritt des Einsatzhärtens des Rohlings im Anschluss an den Schritt des Bearbeitens des Rohlings erfolgt. Demgemäss wird der Rohling vor dem Härten bearbeitet. Das zeitliche Nachordnen des Einsatzhärtens an das Bearbeiten kann das Bearbeiten vereinfachen und für besonders homogene Produkteigenschaften sorgen.

Auf den Schritt des Einsatzhärtens kann zweckmässigerweise ein Schritt des Tiefkühlens des Rohlings, bevorzugt bei Temperaturen unter minus 80°C, besonders bevorzugt bei einer Temperatur von minus 150°C, und anschliessendes Anlassen des Rohlings, bevorzugt bei Temperaturen zwischen 150°C und 500°C, besonders bevorzugt bei Temperaturen zwischen 200°C und 250°C, und/oder und Haltezeiten zwischen 1 Stunde und 5 Stunden, folgen. Hierdurch kann eine noch höhere Härte und/oder Zähigkeit ohne Verminderung des Korrosionswiderstands eingestellt werden.

Der Rohling liegt zu Beginn des Verfahrens zweckmässigerweise in Drahtform vor, das heisst er ist ein drahtförmiges Halbzeug, was den Aufwand weiter reduzieren kann.

Wie schon mehrfach erwähnt ist die Erfindung besonders geeignet für die Fertigung von Schrauben. Besonders bevorzugt ist es daher, dass der Formkörper eine Schraubenform ist, vorzugsweise mit einem Schraubenschaft und einem am Schraubenschaft angeordneten Gewinde. Die Schraubenform kann am Ende des Verfahrens einen Teil einer fertigen Schraube oder vorzugsweise die gesamte Schraube bilden, das heisst vorzugsweise wird eine monolithische Schraube vorgesehen.

Insbesondere kann ein lokales Induktionshärten eines Spitzenbereichs der Schraubenform und vorzugsweise hieran anschliessend ein Tiefkühlen der Schraubenform vorgesehen werden. Durch das induktive Härten an der Schraubenspitze kann eine lokale Erhöhung der Härte auf 580-700 HV0.3 erzielt werden, ohne jedoch die Zähigkeit in versagenskritischen Bereichen der Schraube, beispielsweise im Kopf-, Unterkopf- und/oder Schaftbereich, zu beeinträchtigen.

Die Erfindung betrifft auch den vorgenannten Stahl als solchen, nämlich einen Stahl mit 0,07 bis 0,14 gew.-% Kohlenstoff, vorzugsweise 0,08 bis 0,12 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-%, vorzugsweise 1,2 gew.-%, Mangan.

Die Erfindung betrifft auch die Verwendung eines erfindungsgemässen Stahls zur Herstellung einer Schraube und/oder eine Schraube, welche zumindest bereichsweise einen erfindungsgemässen Stahl aufweist und/oder welche in einem erfindungsgemässen Verfahren erhältlich ist, insbesondere erhalten wird. Die Schraube kann vorzugsweise eine selbstschneidende Schraube sein. Sie kann beispielsweise eine Betonschraube, das heisst eine Schraube zum Einschneiden in Beton, oder auch eine Selbstbohrschraube für Bleche sein. Vorzugsweise ist die Schraube eine monolithische Schraube.

Das Verhältnis des Aussendurchmessers eines Gewindes der Schraube zur Gewindesteigung des Gewindes kann im Bereich von 1 bis 2, insbesondere im Bereich von 1,2 bis 1,45 liegen. Dies sind typische Gewindedimensionen für Schrauben, die zum selbstschneidenden Eindrehen in mineralische Substrate wie beispielsweise Beton vorgesehen sind. Unter der Steigung kann insbesondere der axiale Abstand aufeinander folgender Windungen eines Gewindegangs verstanden werden. Nach der Erfindung kann auch ein Betonsubstrat mit einer Bohrung vorgesehen sein, in die eine erfindungsgemässe Schraube eingedreht ist, wobei im Betonsubstrat eine Negativform zum Schneidgewinde der Schraube gebildet ist. Demgemäss ist die Schraube unter Bildung eines Gegengewindes selbstschneidend in die Bohrung im Betonsubstrat eingedreht.

Vorzugsweise enthält der Stahl nach der Erfindung 0,08 bis 0,12 gew.-% Kohlenstoff, wodurch sich noch vorteilhaftere Materialeigenschaften, insbesondere im Hinblick auf Schraubenanwendungen, erzielen lassen.

Merkmale, die im Zusammenhang mit dem erfindungsgemässen Verfahren, dem erfindungsgemässen Stahl, der erfindungsgemässen Verwendung oder der erfindungsgemässen Schraube erläutert werden, sollen nicht auf diese Kategorie beschränkt sein, sondern können auch bei der jeweils anderen Kategorie, das heisst Verfahren, Stahl, Verwendung oder Schraube, zum Einsatz kommen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: ein schematisches Ablaufdiagramm eines erfindungsgemässen Herstellungsverfahrens; und
- Figur 2:: eine schematische Darstellung einer erfindungsgemässen Schraube, hergestellt in einem erfindungsgemässen Herstellungsverfahren.

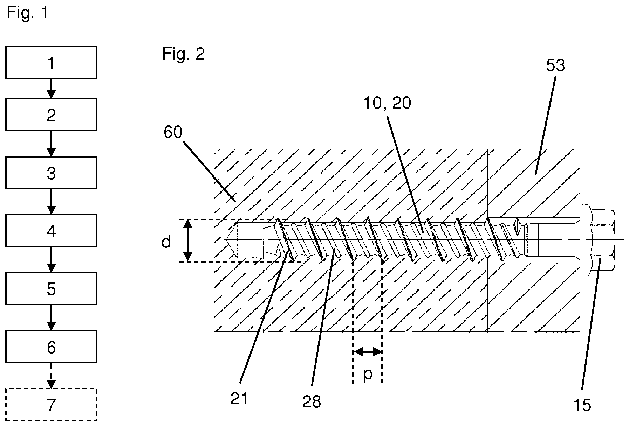

Figur 1 zeigt schematisch die Schrittfolge einer möglichen Ausgestaltung eines erfindungsgemässen Herstellungsverfahrens. Zunächst wird in Schritt 1 ein, vorzugsweise drahtförmiger, Rohling aus einem Stahl enthaltend 0,07 bis 0,14 gew.-%, vorzugsweise 0,08 bis 0,12 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan bereitgestellt. Zusätzlich kann der Stahl weitere stahlübliche Beimengungen aufweisen, beispielsweise Vanadium (insbesondere < 0,2 gew.-%), Niob (insbesondere < 0,2% gew.-%), Titan (insbesondere < 0,2 gew.-%) und/oder Silizium (insbesondere < 0.5 gew.-%). Der Rest ist Eisen mit unvermeidlichen Verunreinigungen, beispielsweise Schwefel und/oder Phosphor, insbesondere jeweils < 0,02 gew.-%.

Sodann wird der Rohling in Schritt 2 bearbeitet, beispielsweise umgeformt, vorzugsweise gewalzt, und der Rohling dabei in die Form eines Formkörpers, insbesondere in die Form einer Schraubenform mit einem Schraubenschaft 20 und einem am Schraubenschaft 20 angeordneten Gewinde 21 gebracht. Optional kann die Schraubenform auch einen am Schraubenschaft 20 angeordneten Drehantrieb 15, beispielsweise einen Schraubenkopf, aufweisen. In diesem Fall kann der Schritt 2 des Bearbeitens zusätzlich zum Walzen auch ein Stauchen des Rohlings umfassen.

Der als Schraubenform ausgebildete Rohling wird anschliessend in Schritt 3 bei einer Temperatur grösser 900°C, insbesondere zwischen 1000°C und 1150°C, besonders bevorzugt zwischen 1030°C und 1100°C, in einer stickstoffhaltigen Gasatmosphäre gehärtet, wobei der Stickstoffpartialdruck der Gasatmosphäre vorzugsweise zwischen 0.05 bar und 0.6 bar liegt, bevorzugt kleiner als 0.3 bar ist und besonders bevorzugt kleiner als 0.20 bar ist. Optional kann die Gasatmosphäre auch Kohlenstoff enthalten.

Im Anschluss wird der als Schraubenform ausgebildete Rohling in Schritt 4 abgeschreckt, insbesondere gasabgeschreckt.

Im anschliessenden Schritt 5 folgt eine Tiefkühlbehandlung des als Schraubenform ausgebildeten Rohling bei Temperaturen unter minus 80°, beispielsweise bei minus 150°C. Schliesslich wird der als Schraubenform ausgebildete Rohling in Schritt 6 angelassen, vorzugsweise in einem Temperaturbereich zwischen 150°C und 500°C, besonders bevorzugt zwischen 200°C und 250°C, und/oder einer Haltezeit zwischen 1 Stunde und 5 Stunden.

Optional kann in einem anschliessenden Schritt 7 ein lokales, vorzugsweise induktives, Härten an einem Spitzenbereich des als Schraubenform ausgebildeten Rohlings und vorzugsweise ein anschliessendes Tiefkühlen des als Schraubenform ausgebildeten Rohlings vorgesehen werden.

Ein Ausführungsbeispiel einer erfindungsgemäss hergestellten Schraube, die als Betonschraube ausgebildet ist, ist in Figur 2 dargestellt.

Die Schraube 10 weist einen zylindrischen Schraubenschaft 20 auf, an dessen Ende ein Sechskantschraubenkopf vorgesehen ist, der einen Drehantrieb 15 bildet. Längs des Schraubenschafts 20 erstreckt sich ein als Schneidgewinde ausgebildetes Gewinde 21 mit einem Aussendurchmesser d und einer Steigung p. Fakultativ kann am Schraubenschaft 20 auch ein durchmesserkleineres Stützgewinde 28 vorgesehen sein.

Der Schraubenschaft 20 der Schraube ist in eine Bohrung in einem mineralischen Substrat 50, insbesondere in einem Betonsubstrat, eingedreht, wobei das als Schneidgewinde ausgebildete Gewinde 21 beim Eindrehen ein korrespondierendes Gewinde im Substrat 50 freigeschnitten hat. Der Schraubenschaft 20 ist durch eine Bohrung in einem Anbauteil 53 durchgeführt, welches vom als Schraubenkopf ausgebildeten Drehantrieb 15 am Substrat 50 gesichert wird.

## Patentansprüche

1. Verfahren zum Herstellen eines Formkörpers aus einem Rohling aufweisend einen Stahl mit einem Gewichtsanteil von 0,07 bis 0,14 gew.-% Kohlenstoff, 13 bis 15 gew.-% Chrom, 1,3 bis 1,7 gew.-% Molybdän, 1,5 bis 2,0 gew.-% Nickel, 1,0 bis 1,5 gew.-% Mangan, 0 bis 0,2 gew.-% Vanadium, 0 bis 0,2 gew.-% Niob, 0 bis 0,2 gew.-% Titan, 0 bis 0,5 gew.-% Silizium und dem Rest Eisen.

2. Verfahren nach Anspruch 1,
**gekennzeichnet durch** den Schritt (3):
Einsatzhärten des Rohlings mit Stickstoff aus der Gasphase, vorzugsweise bei Temperaturen zwischen 1000°C und 1150°C und/oder einem Stickstoffpartialdruck zwischen 0.05 und 0.3 bar.

3. Verfahren nach Anspruch 2,
**dadurch gekennzeichnet, dass** das Einsatzhärten des Rohlings mit Stickstoff aus der Gasphase in Kombination mit einem Aufkohlen des Rohlings mit Kohlenstoff aus der Gasphase erfolgt.

4. Verfahren nach einem der Ansprüche 2 oder 3,
**gekennzeichnet durch** den Schritt (2):
- Bearbeiten des Rohlings,
wobei der Schritt (3) des Einsatzhärtens des Rohlings im Anschluss an den Schritt (2) des Bearbeitens des Rohlings erfolgt.

5. Verfahren nach einem der vorstehenden Ansprüche,
**gekennzeichnet durch** den Schritt (5, 6):
Tiefkühlen des Rohlings bei Temperaturen unter minus 80°C und anschliessendes Anlassen des Rohlings bei Temperaturen zwischen 150°C und 500°C.

6. Verfahren nach einem der vorstehenden Ansprüche,
**dadurch gekennzeichnet, dass** der Formkörper eine Schraubenform ist.

7. Verfahren nach einem Anspruch 6,
**gekennzeichnet durch** den Schritt (7):
lokales Induktionshärten eines Spitzenbereichs der Schraubenform.

8. Stahl mit einem Gewichtsanteil von 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan, 0 bis 0,2 gew.-% Vanadium, 0 bis 0,2 gew.-% Niob, 0 bis 0,2 gew.-% Titan, 0 bis 0,5 gew.-% Silizium und dem Rest Eisen.

9. Verwendung eines Stahls nach Anspruch 8 zur Herstellung einer Schraube (10).

10. Schraube (10), **dadurch gekennzeichnet, dass** sie zumindest bereichsweise einen Stahl nach Anspruch 8 aufweist und/oder dass sie in einem Verfahren nach einem der Ansprüche 1 bis 7 erhältlich ist.

11. Schraube (10) nach Anspruch 10, **dadurch gekennzeichnet, dass** das Verhältnis des Aussendurchmessers (d) eines Gewindes (21) der Schraube (10) zur Gewindesteigung (p) des Gewindes (21) im Bereich von 1 bis 2, insbesondere im Bereich von 1,2 bis 1,45 liegt.

## Claims

1. Method for producing a shaped body from a blank comprising a steel with a percentage by weight of 0.07 to 0.14 wt% carbon, 13 to 15 wt% chromium, 1.3 to 1.7 wt% molybdenum, 1.5 to 2.0 wt% nickel, 1.0 to 1.5 wt% manganese, 0 to 0.2 wt% vanadium, 0 to 0.2 wt% niobium, 0 to 0.2 wt% titanium, 0 to 0.5 wt% silicon and the remainder iron.

2. Method according to Claim 1,
**characterized by** the step (3):
of case hardening the blank with nitrogen from the gas phase, preferably at temperatures between 1000°C and 1150°C and/or a nitrogen partial pressure of between 0.05 and 0.3 bar.

3. Method according to Claim 2,
**characterized**
**in that** the case hardening of the blank with nitrogen from the gas phase is performed in combination with a carburizing of the blank with carbon from the gas phase.

4. Method according to either of Claims 2 and 3,
**characterized by** the step (2):
- of working the blank,
wherein the step (3) of case hardening the blank is performed subsequent to the step (2) of working the blank.

5. Method according to one of the preceding claims,
**characterized by** the step (5, 6):
of deep freezing the blank at temperatures below minus 80°C and subsequently annealing the blank at temperatures between 150°C and 500°C.

6. Method according to one of the preceding claims,
**characterized**
**in that** the shaped body is a screw shape.

7. Method according to Claim 6,
**characterized by** the step (7):
of local induction hardening of a tip region of the screw shape.

8. Steel with a percentage by weight of 0.07 to 0.14 wt% carbon, 13 to 15 wt% chromium, 1.3 to 1.7 wt% molybdenum, 1.5 to 2.0 wt% nickel, 1.0 to 1.5 wt% manganese, 0 to 0.2 wt% vanadium, 0 to 0.2 wt% niobium, 0 to 0.2 wt% titanium, 0 to 0.5 wt% silicon and the remainder iron.

9. Use of a steel according to Claim 8 for producing a screw (10).

10. Screw (10), **characterized in that** it comprises, at least in certain regions, the steel according to Claim 8 and/or **in that** it can be obtained by a method according to one of Claims 1 to 7.

11. Screw (10) according to Claim 10, **characterized in that** the ratio of the outside diameter (d) of a thread (21) of the screw (10) to the thread pitch (p) of the thread (21) lies in the range of 1 to 2, in particular in the range of 1.2 to 1.45.

## Revendications

1. Procédé de fabrication d'un corps moulé à partir d'une ébauche comprenant un acier ayant une proportion en poids de 0,07 à 0,14 % en poids de carbone, 13 à 15 % en poids de chrome, 1,3 à 1,7 % en poids de molybdène, 1,5 à 2,0 % en poids de nickel, 1,0 à 1,5 % en poids de manganèse, 0 à 0,2 % en poids de vanadium, 0 à 0,2 % en poids de niobium, 0 à 0,2 % en poids de titane, 0 à 0,5 % en poids de silicium et la quantité résiduelle de fer.

2. Procédé selon la revendication 1, **caractérisé par** l'étape (3) :
la cémentation de l'ébauche avec de l'azote issu de la phase gazeuse, de préférence à des températures comprises entre 1 000 °C et 1 150 °C et/ou à une pression partielle d'azote comprise entre 0,05 et 0,3 bar.

3. Procédé selon la revendication 2, **caractérisé en ce que** la cémentation de l'ébauche avec de l'azote issu de la phase gazeuse a lieu en combinaison avec une carburation de l'ébauche avec du carbone issu de la phase gazeuse.

4. Procédé selon l'une quelconque des revendications 2 ou 3, **caractérisé par** l'étape (2) :
- l'usinage de l'ébauche,
l'étape (3) de cémentation de l'ébauche ayant lieu à la suite de l'étape (2) d'usinage de l'ébauche.

5. Procédé selon l'une quelconque des revendications précédentes, **caractérisé par** l'étape (5, 6) :
la surgélation de l'ébauche à des températures inférieures à moins 80 °C et ensuite le recuit de l'ébauche à des températures comprises entre 150 °C et 500 °C.

6. Procédé selon l'une quelconque des revendications précédentes, **caractérisé en ce que** le corps moulé est un moule de vis.

7. Procédé selon la revendication 6, **caractérisé par** l'étape (7) :
la trempe par induction locale d'une zone de pointe du moule de vis.

8. Acier ayant une proportion en poids de 0,07 à 0,14 % en poids de carbone, 13 à 15 % en poids de chrome, 1,3 à 1,7 % en poids de molybdène, 1,5 à 2,0 % en poids de nickel et 1,0 à 1,5 % en poids de manganèse, 0 à 0,2 % en poids de vanadium, 0 à 0,2 % en poids de niobium, 0 à 0,2 % en poids de titane, 0 à 0,5 % en poids de silicium et la quantité résiduelle de fer.

9. Utilisation d'un acier selon la revendication 8 pour la fabrication d'une vis (10).

10. Vis (10), **caractérisée en ce qu'**elle comprend au moins en zones un acier selon la revendication 8 et/ou **en ce qu'**elle peut être obtenue dans un procédé selon l'une quelconque des revendications 1 à 7.

11. Vis (10) selon la revendication 10, **caractérisée en ce que** le rapport entre le diamètre extérieur (d) d'un filetage (21) de la vis (10) et le pas de filetage (p) du filetage (21) se situe dans la plage allant de 1 à 2, notamment dans la plage allant de 1,2 à 1,45.
